Europäisches Patentamt

European Patent Office

Office européen des brevets

(11) Publication number: **0 045 606**
A1

# EUROPEAN PATENT APPLICATION

(21) Application number: 81303425.3

(22) Date of filing: 27.07.81

(51) Int. Cl.³: **B 29 D 23/18**
**A 47 L 9/24**

(30) Priority: 31.07.80 GB 8025051

(43) Date of publication of application:
10.02.82 Bulletin 82/6

(84) Designated Contracting States:
AT BE CH DE FR IT LI LU NL SE

(71) Applicant: A.E.S. PLASTICS LIMITED
13 Devonshire Street
Keighley Yorkshire(GB)

(72) Inventor: Wright, Gordon Thomas
55 Windermere Avenue
Burnley Lancashire(GB)

(74) Representative: Funge, Harry et al,
M'CAW & CO. 41-51 Royal Exchange Cross Street
Manchester M2 7BD(GB)

(54) Hose and method of making same.

(57) A method of manufacturing a flexible hose for a vacuum cleaner comprises injection moulding a length of hose (13) in the annular space (12) between a mandrel (11) and a mould body (10), withdrawing the mandrel (11) axially, opening the mould (10) and moving the mandrel (11) and moulded length of hose (13) axially until the mandrel (11) is back to the moulding position, closing the mould (10) and repeating the process until the required continuous length of hose (13) is produced. The mandrel (11) and mould body (10) have corresponding screw thread formations (14,15) so that a corrugated hose (13) is produced, and electrical conducting wires (17) are laid into an axial rib formed on the hose (13).

FIG.3

EP 0 045 606 A1

Croydon Printing Company Ltd.

(EP12501A)    - 1 -
(23.7.81)

HOSE AND METHOD OF MAKING SAME

This invention relates to hoses and to methods of
manufacturing the same, and in particular to flexible
hoses such as are used with suction cleaning equipment
and the like.

It is known to manufacture such hoses by the extrusion
of an appropriate section of a plastics material, winding
the section spirally and welding the spirally wound
section with plastics material.  Such a hose is entirely
of plastics material and may have reinforcing ribs
incorporated therein dependent upon the section shape
extruded.  Alternatively it is known to produce hoses of a
plastics material reinforced with a wire spirally wound on
a mandrel.  It is also known to mould into such hoses an
electrically conducting wire or wires.  However such
processes involve several steps including spiral winding
of either the plastics section or the wire reinforcing
and in consequence the hoses produced are relatively
costly.  Also if such electrically conducting wires are

(EP12501A)
(23.7.81)                    - 2 -

helically wound an excessive quantity of wire is used which adds to the cost of the hose.

It is an object of the present invention to provide a method of manufacturing a hose which avoids the above-mentioned disadvantages.

The invention provides a method of manufacturing a flexible hose comprising the steps of injection-moulding a length of hose in an annular space between a mould body and a mould portion of a mandrel located in a moulding position within said mould, moving said mandrel axially thereof to a position in which only an end of said mould portion remains within said mould body, opening said mould body and moving said mandrel together with said moulded length of hose until said mandrel is in said moulding position, closing the mould and repeating the aforementioned steps until a desired continuous length of hose is produced.

The method may also include the step of laying a length of one or lengths of a plurality of continuous wires in said mould prior to each injection-moulding step, whereby said wire or wires is or are moulded into said hose in a continuous length or lengths.

Preferably said mandrel is formed having a helical rib on the outer surface of said mould portion in which case said withdrawing step comprises unscrewing said mandrel from the moulded hose. Preferably said mould body is also formed with a helical rib on its inner surface, the helical rib in said mould body being of the same pitch as that in said mandrel but axially displaced therefrom by an amount equal to half of said pitch when said mandrel is located in said moulding position.

(EP12501A)
(23.7.81)                    - 3 -

Said mould body may also be provided with an axially
aligned groove in its inner surface wherein said wire
or wires may be laid, whereby an axially aligned rib
is moulded onto said hose with said wire or wires
embedded therein.

The invention will now be described further by way of
example only and with reference to the accompanying
drawing, in which:-

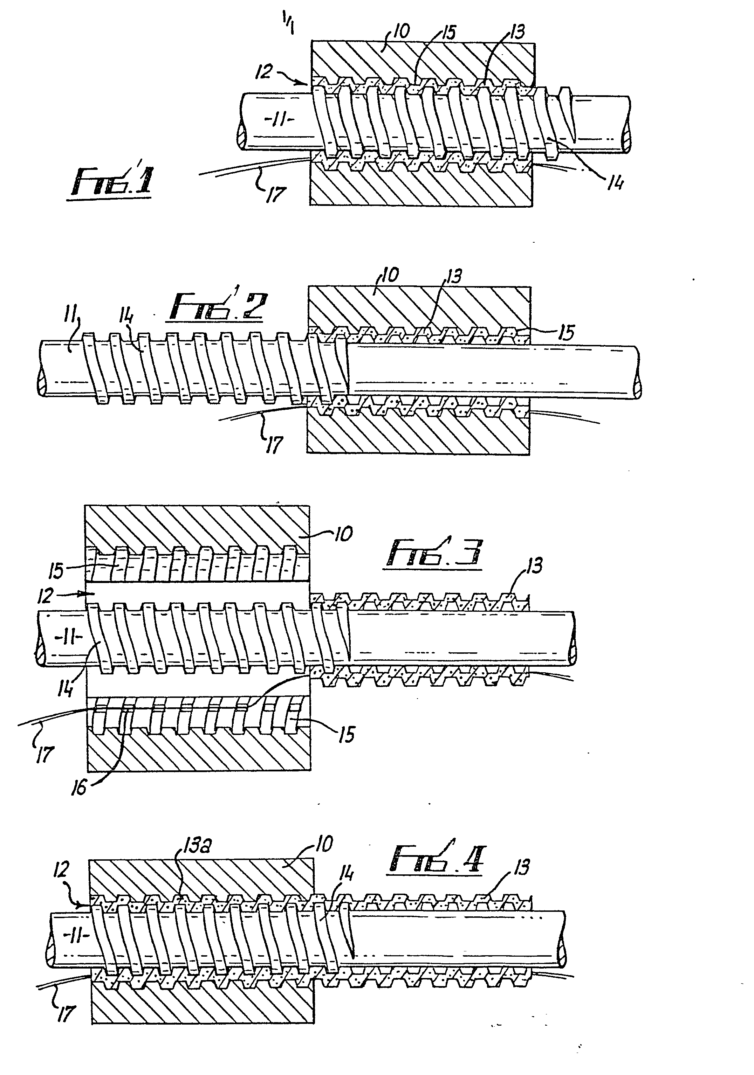

Figs. 1 to 4 illustrate in section one embodiment of
apparatus for use in the method of the
invention in four consecutive steps of
the method.

Referring now to Fig. 1 there is shown a mould body
10 and a mandrel 11 located in a moulding position
concentrically within the body 10 so as to provide an
annular space 12 therebetween.  A thermoplastic material
is injection-moulded into the annular space 12 to form
a length of hose 13.  The mandrel 11 is formed having
a helical rib 14 extending along a moulding portion on
its outer surface and the mould body 10 is formed
having a helical rib 15 on its inner surface.  The ribs
14, 15 are of equal pitch but are displaced axially by
an amount equal to half of that pitch when the mandrel
11 is located in the moulding position so that the hose
13 is helically ribbed but of constant wall thickness.

When the length of hose 13 is formed the mandrel 11
is screwed relative thereto until it reaches the
position shown in Fig. 2.  In this position only a
short length of helical rib 14 remains within the hose
13 and mould body 10.  The mould body 10 is then opened
and the mandrel 11 is moved back to the moulding
position as shown in Fig. 3.  The mandrel 11 is not

(EP12501A)
(23.7.81)                    - 4 -

rotated during this movement so that the hose 13 remains
supported by the mandrel 11 and stationary relative
thereto.  When the mandrel 11 is in the moulding position
the hose 13 extends beyond the mould body 10 which is
then closed to form the annular space 12 around the
mandrel.  A further length of hose 13a is then injection-
moulded in the annular space 12 as shown in Fig. 4, hose
lengths 13, 13a becoming integral.

By successively repeating the steps described above
a continuous hose may be produced of any desired length.

As shown in Fig. 3 an axially aligned groove 16 is
provided in the mould body 10.  Along this groove one
or more electrically conducting wires 17 are laid so as
to be moulded into a longitudinally extending rib (not
shown) on the hose 13.  Since the hose 13 does not
rotate relative to the mould body 10 only a length of
wire or wires 17 equal to the length of the hose 13 is
required, successive portions of wire 17 being pulled
from a supply thereof (not shown) into the groove 16 by
the movement of the mandrel 11 and hose 13 from the
position of Fig. 2 to that of Fig. 3.

The helical ribs 14, 15 are shown as being of
rectangular form but alternative forms of rib may be
provided if preferred.

Also the electrically conducting wires 17 may be of
round section as is conventional or may be flattened
so as to be enclosable in a shallower rib on the hose.
In this case the hose would possess greater flexibility
than would be achieved in the case of round wires.

Alternatively, or in addition to the electrically

(EP12501A
(23.7.81)
- 5 -

conducting wires 17, a tube may be laid so as to be moulded into a longitudinally extending rib in the manner previously described. Such tube may then be used for the subsequent housing of the electrically conducting wires 17 or for the feeding of fluid such as detergent to a carpet cleaning device, or air to a pneumatically operated switching device, mounted on the head of the suction cleaning device.

(EP12501A)
(23.7.81)                    - 6 -

Claims:

1.    A method of manufacturing a flexible hose (13,13a) comprising the steps of injection-moulding a length of hose (13) in an annular space (12) between an openable mould body (10) and a mould portion of a mandrel (11) located in a moulding position within said mould (10), characterised by moving said mandrel (11) axially thereof firstly to a position in which only an end of said mould portion remains within said body (10) and secondly back to said moulding position, one of said movements being alone whilst said mould body (10) is closed and the other of said movements being together with said moulded length of hose (13) whilst said mould body (10) is open, and repeating said steps until·a desired continuous length of hose (13,13a) is produced.

2.    A method according to claim 1, characterised in that said first movement is performed alone with said mould body (10) closed and then said second movement is performed together with said moulded length of hose (13) whilst said mould body (10) is open.

3.    A method according to claim 1 or claim 2, characterised in that said mandrel (11) is formed having a helical rib (14) on the outer surface of said mould portion.

4.    A method according to claim 3, characterised in that said movement of said mandrel (11) alone comprises unscrewing said mandrel (11) from said moulded length of hose (13)

(EP12501A)
(23.7.81) - 7 -

5. A method according to any one of claims 1 to 4, characterised by laying in a length of at least one continuous wire (17) or tube in said mould (10) prior to each injection moulding step whereby the or each wire(17) or tube is moulded into said hose (13) to extend continuously therealong.

6. A method according to claim 5, characterised by moulding onto said moulded length of hose (13) an axially extending rib in which said wire or wires or tube is or are embedded.

7. Apparatus for performing the method of claim 1 comprising an openable mould body (10), a mandrel (11) having a mould portion, said mandrel (11) being disposed so as to provide an annular space (12) between said mandrel (11) and said mould body (10), characterised by means for moving said mandrel (11) axially thereof between a position in which said mould portion is within said mould body (10) and a position in which only an end of said mould portion is within said mould body (10).

8. Apparatus according to claim 7, characterised in that said mandrel (11) is formed having a helical rib (14) on the outer surface of said mould portion.

9. Apparatus according to claim 8, characterised in that said mandrel moving means comprises means for rotating said mandrel (11) about its axis whilst it is moved between said positions in one direction therebetween.

(EP125C1A)
(23.7.81)                        - 8 -

10.    Apparatus according to claim 8 or claim 9,
characterised in that
said mould body (10) is formed having a helical rib (15)
on its inner surface of the same pitch as that of said
mandrel (11).

11.    Apparatus according to claim 10,
characterised in that
said rib (14) on said mandrel (11) is axially displaced
from said rib (15) on said mould body (10) by an amount
equal to half of said pitch when said mandrel (11) is
in said moulding position.

12.    Apparatus according to any one of claims 8 to 11,
characterised in that
said rib or ribs (14,15) is or are of rectangular cross-
section.

13.    Apparatus according to any one of claims 7 to 12,
characterised in that
said mould body (10) is provided with an axially aligned
groove (16) in its inner surface.

Fig.1

Fig.2

Fig.3

Fig.4

| Category | Citation of document with indication, where appropriate, of relevant passages | Relevant to claim | CLASSIFICATION OF THE APPLICATION (Int. Cl.³) |
|---|---|---|---|
| | FR - A - 2 158 158 (B.N.C. & CIE.) <br> * claim 1; page 2, lines 1 to 12; fig. 1 * | 1,3,7, 8,10 | B 29 D 23/18 <br> A 47 L 9/24 |
| | DE - A - 2 321 398 (DURO-PENTA HOLDINGS) <br> * claims 1 to 4, 8; page 2, paragraphs 2 to 4; fig. 1 * | 1,2,7 | |
| | US - A - 4 132 576 (P.J. NERONI et al.) <br> * claims 4, 6; column 5, lines 23 to 26; fig. 2, 3, 7 * | 5,6,13 | **TECHNICAL FIELDS SEARCHED (Int. Cl.³)** |
| | GB - A - 1 231 682 (TARKETT AB) <br> * claim 1; fig. 1 * | 1,7 | A 47 L 9/00 <br> B 29 D 1/00 <br> B 29 D 23/00 <br> B 29 F 1/00 <br> F 16 L 11/00 |
| P,A | DE - A1 - 3 015 442 (AUTOMATION IN-DUSTRIES, INC.) <br> * claim 1; page 8, paragraph 3; fig. 1, 2 * | | |
| A | US - A - 3 222 728 (F.T. ROBERTS et al.) | | |

DOCUMENTS CONSIDERED TO BE RELEVANT

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | |
|---|---|---|
| X The present search report has been drawn up for all claims | | |
| Place of search <br> Berlin | Date of completion of the search <br> 15-10-1981 | Examiner <br> FINDELI |

EPO Form 1503.1 06.78